# EUROPÄISCHE PATENTSCHRIFT

(11) **EP 0 801 242 B1**
(45) Veröffentlichungstag und Bekanntmachung des Hinweises auf die Patenterteilung: **06.06.2001**
(21) Anmeldenummer: 97103677.7
(22) Anmeldetag: 06.03.1997
(51) Int. Cl.: F16D 33/08

(54) **Hydrodynamische Kupplung**
Hydrodynamic coupling
Accouplement hydrodynamique

(30) Priorität: 12.04.1996 DE 19614591
(43) Veröffentlichungstag der Anmeldung: 15.10.1997
(73) Patentinhaber: Voith Turbo GmbH & Co. KG, 89522 Heidenheim (DE)
(72) Erfinder: Adleff, Kurt, 74564 Crailsheim (DE); Hercher, Gerd-Peter, 74579 Fichtenau-III (DE); Tietz, Maik, 74564 Crailsheim (DE)
(74) Vertreter: Dr. Weitzel & Partner

(56) Entgegenhaltungen:
- EP-A- 0 504 051
- DE-A- 19 614 591
- FR-A- 2 676 521
- GB-A- 2 159 252

## Beschreibung

Die Erfindung betrifft eine hydrodynamische Kupplung mit selbsttätiger Drehmomentbegrenzung.

Hydrodynamische Kupplungen haben den Vorteil eines elastischen Arbeitsverhaltens sowie einer sanften, relativ stoßfreien Übertragung eines Drehmoments, beispielsweise von einem Motor auf ein Förderband. Es gibt aber zahlreiche Fälle in der Praxis, in denen es wünschenswert ist, das übertragbare Drehmoment zu begrenzen oder abzusenken. Hierdurch wird der Motor beim Anfahren noch mehr geschont.

DE 43 11 350 A1 zeigt und beschreibt eine hydrodynamische Kupplung mit einer selbsttätigen Drehmomentbegrenzung. Hierbei ist radial innerhalb des Pumpenrades ein Stauraum vorgesehen. Vor dem Anfahren der Kupplung befindet sich der größte Teil des Öles, das als Arbeitsmedium dient, innerhalb des genannten Stauraumes. Beim Anfahren der Kupplung wird zunächst das Pumpenrad in Umlauf versetzt. Da der Arbeitsraum hierbei zunächst noch wenig oder gar kein Öl enthält, wird das Turbinenrad zunächst noch nicht angetrieben. Im Stauraum bildet sich ein Ölring, der nach und nach über eine Überströmkante in denjenigen Teil des Arbeitsraumes eintritt, der aus dem Pumpenrad gebildet wird, und der schließlich völlig in den Arbeitsraum überströmt. Auf diese Weise wird ein relativ sanftes Anfahren erreicht.

DE-AS 1 218 118 beschreibt eine hydrodynamische Kupplung, die ebenfalls eine selbsttätige Drehmomentbegrenzung aufweist. Hierbei ist ein Stauraum vorgesehen, der mit dem Arbeitsraum über einen im Turbinenrad vorgesehenen Durchgang in Verbindung steht.

DE-U 84 14 929 beschreibt eine Kupplung mit einem Stauraum, der durch eine Drosselscheibe begrenzt ist. Die Drosselscheibe greift in den Arbeitsraum ein, so daß eine ständige Beeinträchtigung der Strömung im Arbeitsraum erfolgt.

US 3 173 260 beschreibt eine hydrodynamische Kupplung, bei der eine Scheibe in der Mittelebene zwischen Pumpenrad und Turbinenrad angeordnet ist, die sich in radialer Richtung erstreckt. Auf der Pumpenseite ist ein Stauraum vorgesehen. Dieser ist durch eine Drosselscheibe gegenüber dem Turbinenrad begrenzt. Die Beschaufelung des Turbinenrades erstreckt sich in den Bereich der Drosselscheibe, und die Drosselscheibe reicht bis zur Beschaufelung des Turbinenrades. Deshalb wird auch hier die Strömung im Arbeitsraum von der Drosselscheibe ständig beeinflußt, was für den Betrieb der Kupplung nachteilig ist.

Eine gattungsgemäße hydrodynamische Kupplung mit selbsttätiger Drehmomentbegrenzung ist aus der Druckschrift FR-A-2 676 521 bekannt. Diese offenbart eine hydrodynamische Kupplung mit einem Pumpenrad mit einem Turbinenrad, welche miteinander einen torusförmigen Arbeitsraum bilden, wobei dem Pumpenrad eine Schale drehfest angeschlossen ist, die das Turbinenrad umgreift und mit diesem einen Ringspalt bildet, der radial außen mit dem Arbeitsraum kommuniziert. Die Schale trägt dabei an ihrem radial inneren Ende eine zur Kupplungsachse konzentrische Ringkammer, die einen Stauraum umschließt. Die Öffnungen zwischen Stauraum und Ringspalt befinden sich in radialer Richtung betrachtet auf einer Höhe, welche im Bereich der Unterkante des torusförmigen Arbeitsraumes liegt bzw. höher. Ein wesentlicher Nachteil einer derartigen Ausführung besteht darin, daß insbesondere bei kleiner Füllung der Stauraum nicht mehr komplett gefüllt werden kann bzw. auch die Entleerung nicht im gewünschten Maße rasch erfolgen kann. Dies gestaltet sich nachteilig für den Anfahrvorgang.

Der Erfindung liegt die Aufgabe zugrunde, eine hydrodynamische Kupplung zu schaffen, die einen Stauraum aufweist, und mit der ein noch sanfteres Anfahren möglich ist. Die Kupplung soll einfach im Aufbau und kostengünstig in der Fertigung sein.

Diese Aufgabe wird durch die Merkmale von Anspruch 1 gelöst.

Gemäß der Erfindung findet eine reine Anlaufentlastung statt. Im höheren Schlupfbereich kommt es nicht zu einer Bespülung der Verzögerungskammer - die Kupplung bleibt steif. Im Gegensatz zu vorbekannten Kupplungen ist kein zusätzliches Öl notwendig, um einen Nennschlupf zu gewährleisten. Dies bedeutet, daß durch die gewählte Lage des Stauraumes 6.1 eine ganz erhebliche Reduzierung des Anfahrmomentes erzielt wird. Es gibt keine vergrößerten Nebenräume, und damit keine größeren Luftvolumina. Damit ist auch der Einfluß auf die Charakteristik minimiert. Beim Anfahren befindet sich das meiste oder alles Öl im Stauraum. Der Stauraum steht über den Ringspalt zwischen der Pumpenschale und dem Turbinenrad mit dem Arbeitsraum in leitender Verbindung. Dieser Spalt hat einen relativ kleinen Querschnitt, so daß er eine Drosselwirkung ausübt. Eine weitere Verbindung zwischen Stauraum und Arbeitsraum gibt es nicht. Aus diesem Grunde erfolgt bei Beginn der Drehmomentübertragung auf das Pumpenrad nur ein sehr langsames Einströmen des Öles in den Arbeitsraum. Dies hat ein sehr sanftes Anfahren zur Folge.

Die Erfindung ist anhand der Zeichnungen näher erläutert. Darin ist im einzelnen folgendes dargestellt:

Figur 1 zeigt eine hydrodynamische Kupplung in einer Gesamtansicht in einem achssenkrechten Querschnitt.

Figur 2 zeigt eine hydrodynamische Kupplung wiederum in einem achssenkrechten Schnitt; hierbei sind die erfindungswesentlichen Teile besser erkennbar.

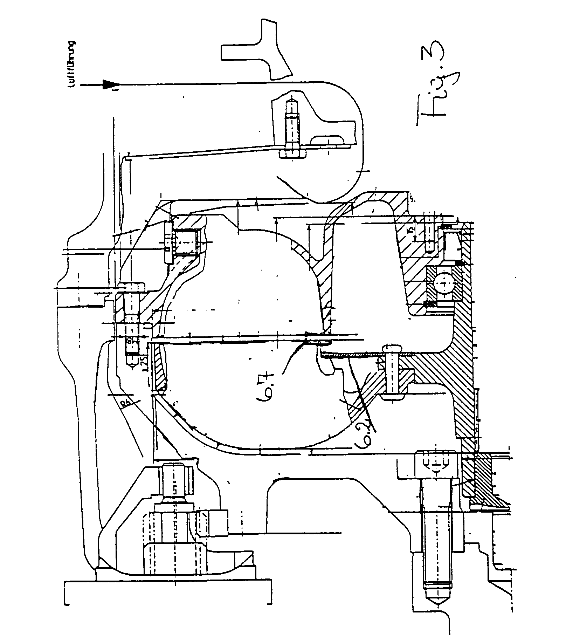

Fig. 3 zeigt eine hydrodynamische Kupplung in einer Ansicht ähnlich jener gemäß Fig. 2. Auch hierbei ist ein Stauraum 6.1 vorgesehen, der durch eine Abdeckscheibe 6.2 begrenzt ist. Eine leitende Verbindung zwischen Stauraum 6.1 und dem Arbeitsraum der Kupplung ist in Gestalt eines sich axial erstreckenden Ringspaltes 6.7 vorgesehen.

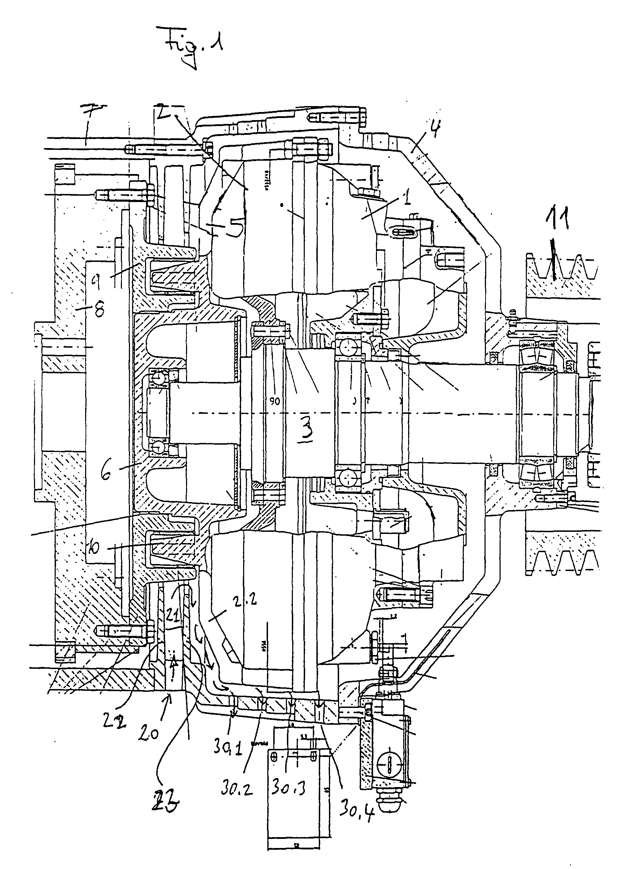

In Figur 1 erkennt man ein Pumpenrad 1, ein Turbinenrad 2, eine Welle 3, ein Gehäuse 4, eine vom Pumpenrad 1 getragene Schale 5 sowie eine von der Schale 5 getragene Ringkammer 6 als wesentlichen Teile der Kupplung. Das Kupplungsgehäuse 4 ist mit dem Gehäuse 7 eines hier nicht dargestellten Motors verschraubt. Außerdem trägt es mittels einer Steckverbindung eine Schwungscheibe 8. Die Schwungscheibe 8 ist mit einem Kupplungsflansch 9 verschraubt. Dieser ist über Mitnehmer 10 mit der Schale 5 und damit mit dem Pumpenrad 1 drehfest verbunden.

Das Turbinenrad ist mit der Welle 3 drehfest verbunden und trägt an seinem rechten Ende eine Riemenscheibe 11.

Vom Motor wird Drehmoment in die Schwungscheibe 8 eingeleitet, von dort zum Kupplungsflansch 9, dann über die Mitnehmer 10 zur Schale 5 und damit zum Kupplungsrad 1. Vom Kupplungsrad 1 erfolgt die Drehmomentübertragung hydrodynamisch über das im Arbeitsraum befindliche Öl zum Turbinenrad 2, von dort zur Welle 3 und weiter zur Riemenscheibe 11.

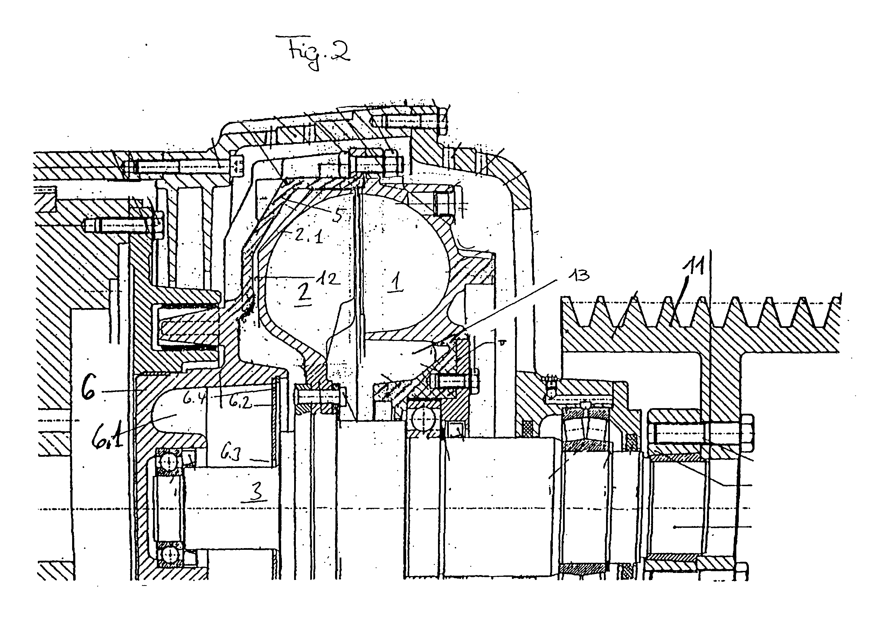

Die entscheidenden Teile sind aus Figur 2 erkennbar. Pumpenrad 1 und Turbinenrad 2 weisen Schaufeln auf, die hier nicht näher bezeichnet sind. Der beschaufelte Raum ist der Arbeitsraum der Kupplung. Zwischen der Umfangswand 2.1 des Turbinenrades und der Schale 5 ist ein Ringspalt 12 gebildet. Dieser hat einen relativ kleinen Querschnitt. Er steht mit einem Stauraum 6.1 in leitender Verbindung, der von der Ringkammer 6 umschlossen ist. Der Stauraum 6.1 ist durch eine ringförmige Abdeckscheibe 6.2 begrenzt. Zwischen dem inneren Umfang der Abdeckscheibe 6.2 und der Welle 3 ist ein Ringspalt 6.3 vorgesehen. Am äußeren Umfang der Drosselscheibe 6.2 sind Bohrungen 6.4 vorgesehen.

Steht das Außenteil der Kupplung still, so sammelt sich ein Teil des Öles im Stauraum 6.1 an, in den es durch den Ringspalt 6.3 nach dem Prinzip der kommunizierenden Gefäße gelangt.

Wird die Kupplung angefahren, so wird zunächst mechanisch Drehmoment auf das Pumpenrad 1 übertragen. Da der Arbeitsraum zu diesem Zeitpunkt von Öl jedoch weitgehend frei ist, kommt es auch nicht zu einem Losbrechen der Antriebsseite. Es bildet sich aber ein Ölring im Stauraum aus, der sich an der radial äußeren Mantelfläche anlegt. Aus diesem Ölring gelangt durch die Bohrungen 6.4 Öl nach und nach durch den Ringspalt 12 radial nach außen. Da der Ringspalt 12 an seinem äußeren Umfang mit dem Arbeitsraum kommuniziert, gelangt auf diese Weise Öl auch in den Arbeitsraum.

Es muß betont werden, daß es keine andere leitende Verbindung zwischen dem Stauraum 6.1 und dem Arbeitsraum gibt, als über den Ringspalt 12. Deswegen erfolgt das Befüllen des Arbeitsraumes mit Öl nur sehr langsam und sehr verzögert, weshalb auch das Drehmoment nur sehr sanft vom Pumpenrad auf das Turbinenrad übertragen wird.

Man erkennt einen weiteren Stauraum 13 radial zwischen Pumpenrad 1 und der Welle 3. Dieser Hilfs-Stauraum kann vorhanden sein, jedoch ist dies nicht zwingend notwendig.

Es muß betont werden, daß das Öl keine andere Möglichkeit hat, vom Stauraum 6.1 zum Arbeitsraum zu gelangen, als über den Ringspalt 12.

Außer den genannten Vorteilen des besonders sanften Anfahrens hat die erfindungsgemäße Kupplung den Vorzug, daß sie nur einen geringen Bauraum einnimmt.

## Patentansprüche

1. Hydrodynamische Kupplung mit selbsttätiger Drehmomentbegrenzung, mit den folgenden Merkmalen:
1.1 ein Pumpenrad (1) und ein Turbinenrad (2) bilden miteinander einen torusförmigen Arbeitsraum
1.2 an das Pumpenrad (1) ist eine Schale (5) drehfest angeschlossen, die das Turbinenrad (2) umgreift und mit diesem einen ersten Ringspalt (12) bildet, der radial außen mit dem Arbeitsraum kommuniziert;
1.3 die Schale (5) trägt an ihrem radial inneren Ende eine zur Kupplungsachse konzentrischen Ringkammer (6), die einen Stauraum (6.1) umschließt
1.4 der Stauraum (6.1) kommuniziert mit dem ersten Ringspalt (12) über Öffnungen (6.3, 6.4),
gekennzeichnet durch die folgenden Merkmale:
1.5 der Stauraum (6.1) ist durch eine Abdeckscheibe (6.2) begrenzt, welche wenigstens einen zweiten Ringspalt (6.3) aufweist;
1.6 der zweite Ringspalt (6.3) befindet sich zwischen der Welle (3) des Turbinenrades (2) und der Abdeckscheibe (6.2).

2. Kupplung nach Anspruch 1, dadurch gekennzeichnet, daß der Stauraum (6.1) über radial äußere (6.4) und radial innere (6.3) Öffnungen mit dem Ringspalt (12) kommuniziert.

3. Kupplung nach Anspruch 1 oder 2, dadurch gekennzeichnet, daß ein Hilfs-Stauraum (13) vorgesehen ist, der sich innerhalb des Arbeitsraumes befindet und vom Pumpenrad umschlossen ist.

4. Kupplung nach einem der Ansprüche 1 bis 3, dadurch gekennzeichnet, daß die Anzahl der Öffnungen (6.4) mindestens vier beträgt.

5. Kupplung nach den Ansprüchen 1 bis 4, dadurch gekennzeichnet, daß das Abdeckblech (6.2) mittels eines Sicherungsringes befestigt ist.

6. Kupplung nach den Ansprüchen 1 bis 5, dadurch gekennzeichnet, daß die Öffnungen (6.4) im radial äußeren Bereich der Abdeckscheibe (6.2) liegen.

7. Kupplung nach einem der Ansprüche 1 bis 6, dadurch gekennzeichnet, daß der Stauraum (6.1) mit dem Ringspalt (12) zwischen Turbinenrad (2) und Schale (5) lediglich über einen weiteren Spalt kommuniziert, der gebildet ist zwischen der Ringkammer (6) und der Turbinenwelle, und der entsprechend eng bemessen ist.

## Claims

1. Hydro-dynamic coupling with automatic torque limitation, with the following features:
1.1: a pump wheel (1) and a turbine wheel (2) jointly establish a toroidal working space;
1.2: non-rotationally attached to the pump wheel (1) is a cup (5) which reaches around the turbine wheel (2) and forms with the latter a first circular gap (12) which communicates radially outside with the working space;
1.3: the cup (5) carries at its radially inner end a circular chamber (6) which is concentric relative to the coupling axis and encases a baffle chamber (6a);
1.4: the baffle chamber (6.1) communicates with the first circular gap (12) via apertures (6.3, 6.4),
**characterised by** the following features:
1.5: the baffle chamber (6.1) is defined by a cover plate (6.2) which comprises at least one second circular gap (6. 3);
1.6: the second circular gap (6.3) is located between the shaft (3) of the turbine wheel (2) and the cover plate (6.2);

2. Coupling according to Claim 1, **characterised in that** the baffle chamber (6.1) communicates with the circular gap (12) via radially outer (6.4) and radially inner (6.3) apertures.

3. Coupling according to Claim 1 or 2, **characterised in that** an auxiliary baffle chamber (13) is provided which is located within the working space and encased by the pump wheel.

4. Coupling according to one of Claims 1 to 3, **characterised in that** the number of apertures (6.4) is at least four.

5. Coupling according to Claims 1 to 4, **characterised in that** the cover plate (6.2) is attached by means of a safety ring.

6. Coupling according to Claims 1 to 5, **characterised in that** the apertures (6.4) lies in the radially outer area of the cover plate (6.2).

7. Coupling according to one of Claims 1 to 6, **characterised in that** the baffle chamber (6.1) communicates with the circular gap (12) between turbine wheel (2) and the cup (5) only via a further gap which is established between the circular chamber (6) and the turbine shaft and dimensioned accordingly narrow.

## Revendications

1. Accouplement hydrodynamique à limitation automatique du couple, présentant les caractéristiques suivantes:
1.1 une roue de pompe (1) et une roue de turbine (2) définissent ensemble une chambre de travail de forme toroïdale,
1.2 un bol (5) est solidaire en rotation de la roue de pompe (1), lequel bol entoure la roue de turbine (2) et définit avec celle-ci un premier espace annulaire (12) qui, radialement à l'extérieur, communique avec la chambre de travail;
1.3 le bol (5) porte, à son extrémité située radialement à l'intérieur, une chambre annulaire (6) concentrique avec l'axe de l'accouplement qui entoure un volume de retenue (6.1)
1.4 le volume de retenue (6.1) communique avec le premier espace annulaire (12) par des ouvertures (6.3, 6.4),
caractérisé par les caractéristiques suivantes
1.5 le volume de retenue (6.1) est limité par une plaque de fermeture (6.2) qui présente au moins un deuxième espace annulaire (6.3)
1.6 le deuxième espace annulaire (6.3) est situé entre l'arbre (3) de la roue de turbine (2) et la plaque de fermeture (6.2).

2. Accouplement selon la revendication 1, caractérisé en ce que le volume de retenue (6.1) communique avec l'espace annulaire (12) par des ouvertures radialement extérieures (6.4) et radialement intérieures (6.3).

3. Accouplement selon la revendication 1 ou 2, caractérisé en ce qu'il est prévu un volume de retenue auxiliaire (13) qui est situé à l'intérieur de la chambre de travail et est entouré par la roue de pompe.

4. Accouplement selon une des revendications 1 à 3, caractérisé en ce que le nombre des ouvertures (6.4) est d'au moins quatre.

5. Accouplement selon une des revendications 1 à 4, caractérisé en ce que la plaque de fermeture (6.2) est fixée au moyen d'un anneau de retenue.

6. Accouplement selon une des revendications 1 à 5, caractérisé en ce que les ouvertures (6.4) sont situées dans la zone radialement extérieure de la plaque de fermeture (6.2).

7. Accouplement selon une des revendications 1 à 6, caractérisé en ce que le volume de retenue (6.1) communique avec l'espace annulaire (12) entre la roue de turbine (2) et le bol (5) seulement par un espace supplémentaire qui est ménagé entre la chambre annulaire (6) et l'arbre de turbine et dont la dimension en largeur est adaptée.
